# EUROPEAN PATENT APPLICATION

(11) **EP 2 015 078 A1**
(43) Date of publication of application: **14.01.2009**
(21) Application number: 08012507.3
(22) Date of filing: 10.07.2008
(51) Int. Cl.: G01N 35/02

(54) **Automatic analyzer and analysis method using the same**

(30) Priority: 13.07.2007 JP 2007184625
(71) Applicant: Hitachi High-Technologies Corporation, Tokyo 105-8717 (JP)
(72) Inventor: Iguchi, Akihiro, Hitachinaka-shi Ibaraki 312-8504 (JP); Motegi, Naoya, Hitachinaka-shi Ibaraki 312-8504 (JP)
(74) Representative: Strehl Schübel-Hopf & Partner

(57) **Abstract**

Disclosed herein is an automatic analyzer which determines a vessel blank value of the automatic analyzer based on a criterion associated with the sensitivity of an analysis item to determine whether or not a vessel is usable. An automatic analyzer includes: an operation unit for calculating an absolute value of a difference between a vessel blank value immediately before measurement of the analysis item and a vessel blank value under periodical measurement to determine whether or not a vessel is usable for measurement based on a plurality of criteria set for each analysis item; and a function of issuing an alarm if the vessel blank value is not judged to be within a criterion.

## Description

### BACKGROUND OF THE INVENTION

### 1. Field of the Invention

The present invention relates to an automatic analyzer which performs quantitative measurement of a biological sample such as blood or urine and an analysis method using the same. More particularly, the invention relates to an automatic analyzer having means for determining a vessel blank value based on a plurality of criteria.

### 2. Description of the Related Art

A conventional automatic analyzer measures a vessel blank value under periodical measurement and determines whether or not a vessel is usable based on variation of the blank value.

In measurement of an analysis item, the conventional analyzer calculates an absolute value of a difference between a vessel blank value used immediately before measurement of the analysis item and a vessel blank value under periodical measurement and determines whether or not a vessel is usable based on a fixed criterion.

JP-A-2001-91518 discloses criteria for vessels. In JP-A-2001-91518, an automatic analyzer performs the steps of: monitoring the vessel blank value for each cell; alarming a vessel failure for a vessel judged to be abnormal based on a change pattern; and requesting the replacement of the vessel.

### SUMMARY OF THE INVENTION

The above-mentioned conventional technique determines whether or not a vessel blank value measured immediately before analysis is usable based on a fixed criterion regardless of the sensitivity of an analysis item to be measured by an automatic analyzer. Therefore, with a high-sensitivity analysis item, analysis is affected by variation of the vessel blank value possibly resulting in degraded accuracy.

On the other hand, even if a vessel is usable for an analysis item not affected by the vessel blank value, the vessel will be replaced when it is judged to be unusable based on a fixed criterion. This results in degraded efficiency of utilization of vessels.

Object of the present invention are to maintain the analysis accuracy associated with each analysis item, in view of the above-mentioned problem, to improve the efficiency of utilization of vessels.

According to an aspect of the present invention, an automatic analyzer comprises: a vessel for reacting a sample and a reagent for analysis; a photometry unit for measuring the absorbance of a light beam penetrating the vessel; and an operation unit for comparing a vessel blank value with a plurality of criteria to determine whether or not the vessel is usable for measurement, the vessel blank value increasing with an increase in variation of the absorbance; wherein the plurality of criteria define different blank reference values specified for each analysis item.

According to another aspect of the present invention, an analysis method for an automatic analyzer comprises: a vessel for reacting a sample and a reagent; a photometry unit for measuring the absorbance of a light beam penetrating the vessel; and an operation unit for comparing a vessel blank value with a criterion to determine whether or not the vessel is usable for measurement, the vessel blank value increasing with an increase in variation of the absorbance; wherein the automatic analyzer includes a plurality of criteria that define a different blank reference value specified for each analysis item; and wherein the automatic analyzer determines whether or not a vessel is usable for each analysis item with reference to the criteria.

In accordance with the present invention, certain analysis/measurement accuracy can be maintained even for an analysis item for which measurement data is susceptible to variation of the vessel blank value. Also efficient use of vessels can be attained.

### BRIEF DESCRIPTION OF THE DRAWINGS

Fig. 1 shows the overall configuration of an automatic analyzer according to an embodiment of the present invention.
Fig. 2 is a flowchart showing a method for inputting conditions for determining whether or not a vessel is usable according to an embodiment of the present invention.
Fig. 3 shows an example of a condition setup image plane according to an embodiment of the present invention.
Fig. 4 shows an example of an image plane for confirming settings made in the image plane of Fig. 3 according to an embodiment of the present invention.
Fig. 5 is a flowchart showing a method for determining whether or not a vessel is usable according to an embodiment of the present invention.
Fig. 6 shows an example of an image plane on which an alarm is displayed for stopping analysis according to an embodiment of the present invention.

### DESCRIPTION OF THE PREFERRED EMBODIMENTS

An embodiment of the present invention will be explained below with reference to the accompanying drawings.

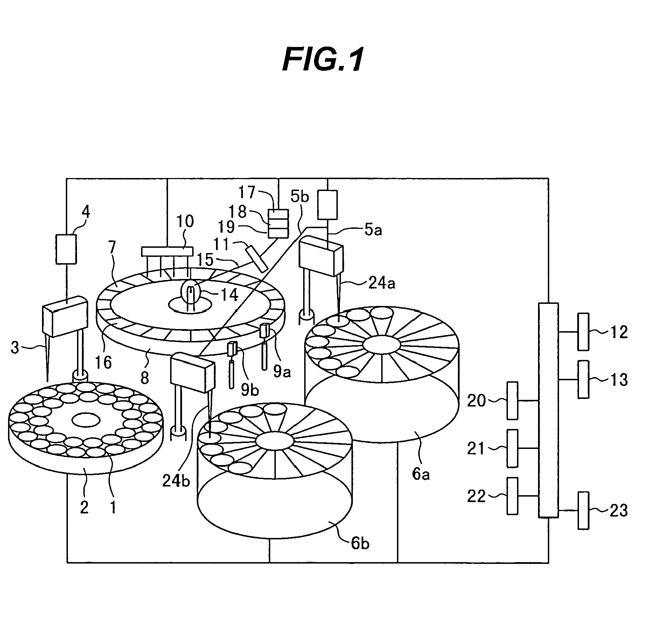

First, the overall configuration of an automatic analyzer will be explained below with reference to Fig. 1.

The automatic analyzer shown in Fig. 1 includes a sample rack 2 that can mount a plurality of sample cups 1, a sampling mechanism 4 having a sample probe 3 for sampling a predetermined quantity of sample, reagent pipetters 5a and 5b for dispensing a plurality of reagents, and reagent compartments 6a and 6b.

The automatic analyzer further includes a reaction compartment 8 which holds a plurality of vessels 7 for direct photometry, stirring mechanisms 9a and 9b, a vessel cleaning mechanism 10, a photometer 11, a central processing unit (microcomputer) 12 which controls the entire system, and a hard disk 13 which stores measurement results, apparatus setup, etc. as main components.

The central processing unit 12 controls such that the reaction compartment 8 holding a plurality of vessels is rotated by half a revolution plus a distance of one vessel and then paused for each cycle. That is, each time the reaction compartment 8 is stopped for each cycle, a vessel 7 on the reaction compartment 8 advances counterclockwise by a distance of one vessel before stopping.

A multi-wavelength photometer having a plurality of detectors is used as the photometer 11. The photometer 11 faces a light source lamp 14. When the reaction compartment 8 is rotating, the photometer 11a is configured such that a train of the vessels 7 passes through a light beam 15 emitted from the light source lamp 14. The vessel cleaning mechanism 10 is arranged between the position of the light beam 15 and a sample discharging position 16.

The automatic analyzer further includes a multiplexer 19 which selects the wavelength, a logarithmic conversion amplifier 18, an A/D converter 17, a printer 20, a CRT 21, a reagent dispensing mechanism drive circuit 22, and an operation panel 23 each being connected to the central processing unit 12 through an interface.

The central processing unit 12 performs control of the entire system including control of the entire mechanism, as well as data processing such as concentration or enzyme activation value calculation.

The overview of an operation with the above-mentioned configuration will be explained below.

When a start switch on an operation panel 23 is pressed, cleaning of the vessel 7 is started by the vessel cleaning mechanism 10, and the blank value of the vessel 7 is measured. This value is used as criteria for absorbance to subsequently be measured in relation to the vessel 7.

With one-cycle operation of the reaction compartment 8, the reaction compartment 8 is rotated by half a revolution plus a distance of one vessel and then paused. After a repetition of one-cycle operation, when the vessel 7 reaches the sample discharging position 16, a sample cup 1 moves to the sampling position.

Likewise, two reagent compartments 6a and 6b also move to the reagent pipetting position. Meanwhile, the sampling mechanism 4 operates such that, for example, the sample amount for an analysis item A is absorbed by the sample probe 3 from the sample cup 1 and then discharged into the vessel 7.

On the other hand, while the sampling mechanism is discharging a sample into the vessel 7, the reagent pipetter 5a starts operation and a first reagent for the analysis item A arranged on a reagent compartment 6a is absorbed by a first reagent probe 24a.

Subsequently, the first reagent probe 24a moves to the vessel 7 and discharges the absorbed reagent into the vessel 7. Then, the inner and outer walls of the probe are cleaned in a probe cleaning tub to prepare for dispensing of the first reagent in relation to a following analysis item B. After the first reagent is added, photometry is started.

Photometry is performed when the reaction compartment 8 is rotating and the vessel 7 crosses the light beam 15. After the first reagent is added, when the reaction compartment 8 is rotated by two revolutions plus a distance of two vessels, a stirring mechanism 9a is activated to stir the sample and the reagent.

When the reaction compartment 8 is rotated by 25 revolutions plus a distance of 25 vessels from the sample dispensing position, i.e., when the vessel 7 reaches a second reagent dispensing position, a second reagent is added from a second reagent probe 24b and then a stirring mechanism 9b stirs the sample and the reagent.

With the rotation of the reaction compartment 8, the vessels 7 cross the light beam 15 one after another. The absorbance of the light beam is measured each time the vessel crosses the light beam. The absorbance of the light beam is measured 34 times in a 10-minute reaction time. The vessel 7 that has been subjected to photometry is cleaned by the vessel cleaning mechanism 10 to prepare for analysis of the following sample.

Measured values of the absorbance are converted to the concentration or an enzyme activation value by the central processing unit 12. Analysis results obtained are output from the printer 20. The analysis results and apparatus setup are stored in the hard disk 13.

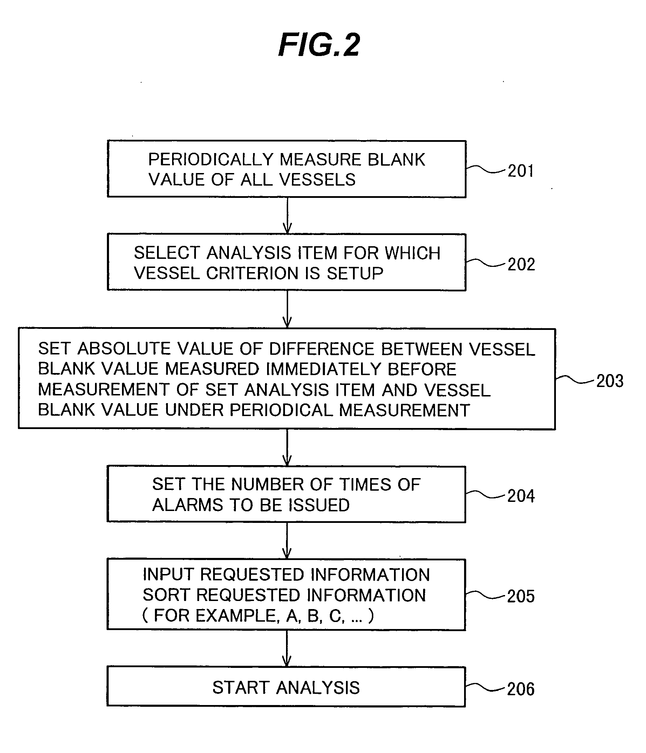

An essential part of the present invention will be explained below with reference to Figs. 2 to 6.

Fig. 2 is a flowchart showing a method for setting different criteria for each analysis item for the vessel of the automatic analyzer according to the present embodiment and sorting requested information before judgment.

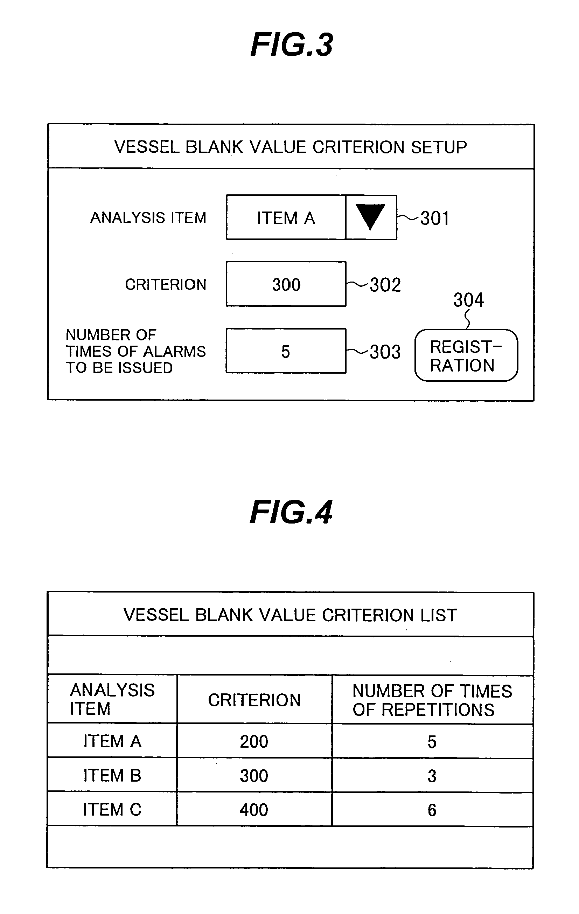

Fig. 3 is an image plane showing a blank value criterion to be set for each analysis item displayed on the CRT 21 in the control unit of the analysis module according to an embodiment of the present invention. The image plane is also used to enter the number of times of alarms to be issued if the blank value is not within the criterion.

Fig. 4 is an image plane for confirming settings input in Fig. 3.

The criteria shown in Figs. 2 to 4 include a plurality of criteria including a different blank reference value for each analysis item. Although the present embodiment uses criteria for three different analysis items (A, B, and C), the use of four or more analysis items or two analysis items is also possible.

With an increase in the blank value, the absorbance of the light beam penetrating a vessel increases and the sensitivity of analysis/measurement decreases. Accordingly, a vessel is used for analysis items C, B, and A having a modester analysis/measurement sensitivity in this order. This makes it possible to maintain the analysis accuracy associated with each analysis item and improve the efficiency of utilization of vessels.

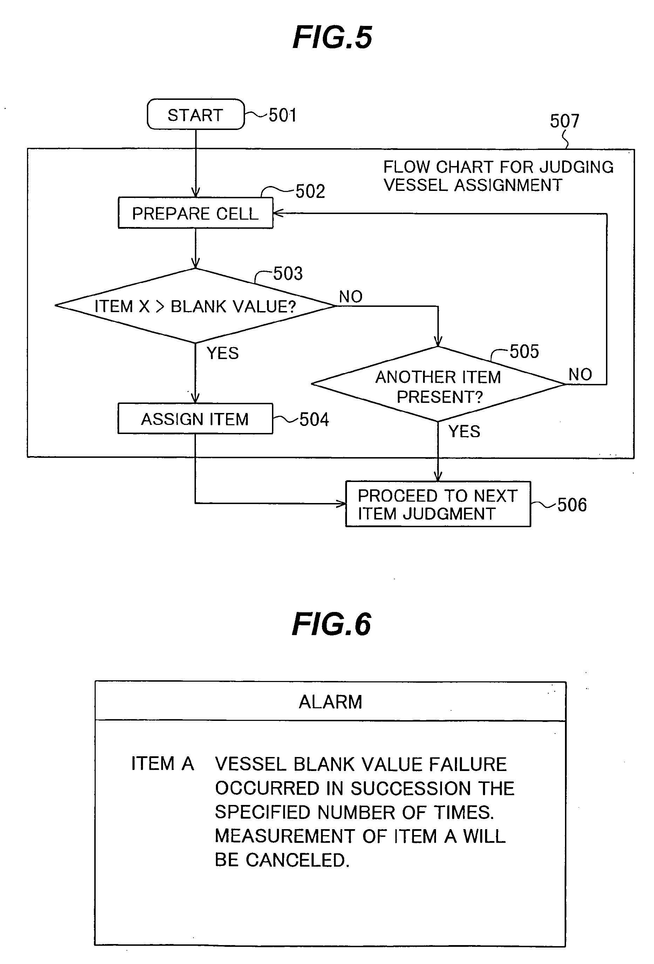

Fig. 5 is a flowchart showing a method for assigning an analysis item to a vessel.

Fig. 6 shows an example alarm to be output from the CRT 21 in the case of failed vessel assignment.

Processing will be explained below with reference to the flowchart shown in Fig. 2.

In Step 201, the automatic analyzer periodically measures blank values of all vessels and stores them in a hard disk 13.

In Step 202, an analysis item is selected using an analysis item selection pull-down menu 301 shown in Fig. 3. In Step 203, an absolute value of a difference between a vessel blank value under periodical measurement and a vessel blank value measured immediately before measurement of the analysis item is input in Box 302 as a criterion.

In Step 204, the number of times of alarms to be issued when the vessel blank value measured immediately before measurement of the analysis item is not within a specified criterion is input in Box 303 as shown in Fig. 3.

After settings in Boxes 301, 302, and 303 of Fig. 3 are input in Steps 202, 203, and 204, respectively, a registration button 304 is pressed to register the settings. The settings input in the image plane of Fig. 3 can be confirmed with the screen on the CRT 21 shown in Fig. 4.

In Step 205, pieces of requested information are input. The input pieces of requested information for analysis item are sorted in ascending order of criterion.

For example, when the analysis item A is 400, the analysis item B is 500, and an analysis item C 700, Step 205 determines whether or not a vessel is usable based on the analysis items A, B, and C in this order.

In Step 206, the automatic analyzer starts analysis and then the processing proceeds to a flowchart for determining vessel assignment (507) shown in Fig. 5.

The following describes, with reference to Fig. 5, the flowchart for determining vessel assignment (507) (flowchart for determining whether or not a vessel can be assigned to each analysis item) using a case where analysis items A and B are input as requested information.

When the automatic analyzer starts analysis in Step 501, the automatic analyzer measures the blank value of a vessel in Step 502 in the flowchart for determining vessel assignment (507). Then, the automatic analyzer calculates an absolute value of a difference between a vessel blank value periodically measured by the central processing unit (microcomputer) 12 and a vessel blank value measured immediately before measurement of the analysis item.

The result of calculation is judged based on analysis items (items A and B) sorted in ascending order in Step 205. First, the automatic analyzer determines whether the blank value is within a criterion based on the analysis item A having a small criterion setting. If the blank value is within the criterion, processing proceeds to Step 504 to assign the vessel to the analysis item A.

After assignment of the analysis item A, processing proceeds to Step 506 to perform judgment for the following analysis item. If processing proceeds to judgment for the following analysis item, the processing proceeds to Step 502 in the flowchart for determining vessel assignment (507) to determine again whether or not a vessel can be assigned to the analysis item.

If the vessel is judged to be unusable with the analysis item A, processing proceeds to Step 505 to determine whether another item is requested. If another analysis item B is requested, processing proceeds to Step 506 to perform judgment for the following analysis item.

In Step 503, for the vessel that has not been judged to be assignable to the analysis item A, the automatic analyzer performs judgment based on a criterion set for the analysis item B to determine whether or not the vessel can be assigned to the analysis item B.

If another analysis item is not requested, processing proceeds to Step 502 from Step 505 to measure the blank value of another vessel to determine again whether or not the vessel can be assigned to the analysis item B.

Subsequently, in another sample, the automatic analyzer repeats Steps 502, 503, 504, and 505 to perform judgment based on a criterion set for each analysis item to determine whether or not a vessel can be assigned to the analysis item.

After the automatic analyzer has repeated Steps 502 to 505 for the same analysis item, if an alarm occurs the number of times specified by the number of times of alarms input in Box 303 in Fig. 3, the automatic analyzer stops measurement of the analysis item and displays a relevant alarm on the CRT 21, as shown in Fig. 6.

As mentioned above, if a criterion of a vessel blank value is provided for each analysis item, a vessel can be assigned to an analysis item in relation to the sensitivity of the analysis item, allowing efficient use of vessels.

## Claims

1. An automatic analyzer comprising:
a vessel for reacting a sample and a reagent for analysis;
a photometry unit for measuring the absorbance of a light beam, the light beam penetrating the vessel; and
an operation unit for comparing a vessel blank value with a criteria to determine whether or not the vessel is usable for measurement, the vessel blank value increasing with an increase in variation of the absorbance;
wherein said operation unit includes a plurality of criteria defining different blank reference values specified for each analysis item.

2. The automatic analyzer according to Claim 1,
wherein:
the automatic analyzer includes a function of creating the vessel blank value based on a blank value measured immediately before measurement of the analysis item and a blank value under periodical measurement.

3. The automatic analyzer according to Claim 1,
wherein:
the automatic analyzer includes a function of indicating a notification including an alarm if the vessel blank value for the analysis item is not within the criterion.

4. An analysis method for an automatic analyzer comprising:
a vessel for reacting a sample and a reagent for analysis;
a photometry unit for measuring the absorbance of a light beam, the light beam penetrating the vessel; and
an operation unit for comparing a vessel blank value with a criterion to determine whether or not the vessel is usable for measurement, the vessel blank value increasing with an increase in variation of the absorbance;
wherein the analysis method includes a plurality of criteria that define a different blank reference value specified for each analysis item; and
wherein the analysis method determines whether or not the vessel is usable for each analysis item with reference to the criteria.

5. The analysis method according to Claim 4, wherein:
the analysis method includes the step of sequentially selecting analysis items within the blank reference value with an increase in the vessel blank value in analysis of reaction in the vessel.

6. The analysis method according to Claim 4, wherein:
the analysis method includes the step of creating the vessel blank value based on a blank value measured immediately before measurement of the analysis item and a blank value under periodical measurement.

7. The analysis method according to Claim 6, wherein:
if the blank value measured immediately before measurement of the analysis item are not within the criterion in succession, the analysis method includes the step of canceling measurement of an associated analysis item.
